# EUROPÄISCHE PATENTSCHRIFT

(11) **EP 0 544 213 B1**
(45) Veröffentlichungstag und Bekanntmachung des Hinweises auf die Patenterteilung: **23.04.1997**
(21) Anmeldenummer: 92119956.8
(22) Anmeldetag: 24.11.1992
(51) Int. Cl.: H02K 5/04, H02K 5/173, H02K 5/15

(54) **Gehäuse, insbesondere für elektrische Kleinmaschinen**
Casing, in particular for small electric machines
Carcasse, en particulier pour petites machines électriques

(30) Priorität: 26.11.1991 DE 4138706
(43) Veröffentlichungstag der Anmeldung: 02.06.1993
(73) Patentinhaber: FHP Motors GmbH, 26133 Oldenburg (DE)
(72) Erfinder: Altmann, Manfred, Dipl.-Ing., W-2900 Oldenburg (DE); Tillner, Siegfried, Dipl.-Ing., W-2900 Oldenburg (DE); Oltmanns, Karl-Heinz, Dipl.-Ing., W-2900 Oldenburg (DE)
(74) Vertreter: Zangs, Rainer E., Dipl.-Ing.

(56) Entgegenhaltungen:
- EP-A- 0 408 988
- EP-A- 0 412 954
- DE-A- 2 923 322
- DE-A- 3 843 967
- FR-A- 1 320 919
- FR-A- 2 287 800
- GB-A- 1 064 955
- GB-A- 2 115 617
- US-A- 1 609 531
- US-A- 3 508 241
- US-A- 3 732 616
- US-A- 4 499 391

## Beschreibung

Die Erfindung betrifft ein Gehäuse, insbesondere für elektrische Kleinmaschinen der im Oberbegriff des Patentanspruchs 1 angegebenen Art.

Es ist bekannt, Gehäuse von kleineren Elektromotoren aus handelsüblichen nahtlosen Rohren dadurch herzustellen, daß man die Bohrung auf ein genaues Maß ausdreht und dann die Ständerblechpakete einschichtet, preßt und dann mit Sprengringen oder dergleichen verspannt. Ferner wurden bereits Blechpakete mit geschweißtem Stahlmantelblech ausgeführt, wobei das vorgespannte Blechpaket in diesem Mantel eingepreßt und durch Umbördeln der Rohrenden die nötige Verspannung der Druckringe gegenüber dem Blechpaket erzielt wurde. Auch ist es bereits bekannt, einen Gehäusemantel mit dem Blechpaket dadurch zu vereinigen, daß er vermittels in Umfangsrichtung verlaufender Sicken das Blechpaket in Achsrichtung festlegt.

Weiterhin ist durch die DE-PS 832 635 eine elektrische Maschine mit einem glockenförmigen Gehäuse bekannt, bei der die Glockenkuppeleine Öffnung mit eingesetztem Lagerkörper hat.

Durch die DE-PS 24 32 178 wird ein gegossener Gehäusemantel offenbart, welcher am Außenumfang des Ständerblechpaketes einer elektrischen Maschine kraftschlüssig anliegt und mit einem durchgehend den Mantel trennenden axialen Innenschlitz versehen ist. Die Verspannung des Gehäusemantels um das Ständerblechpaket erfolgt dadurch, daß die Enden des Gehäusemantels angegossene radiale Rippen aufweisen, welche durch Klammern gegeneinander verspannt werden. Der Gehäusemantel weist hierbei aber keine Lagerstellen für die Läuferwelle auf.

Weiterhin ist in der DE-AS 22 36 408 ein Verfahren zum Herstellen eines topfförmigen Gehäuses, insbesondere eines Gehäuses von elektrischen Kleinmotoren beschrieben, wobei ein Blechstreifen unmittelbar um einen Boden herumgebogen wird und wobei die Haltemittel fortschreitend ineinandergreifen. Auch hierbei weist das Gehäuse noch keine Lagerstellen für die Läuferwelle auf.

Durch die US-A-16 09 531 ist ein Elektromotor mit einem Gehaüse bekannt, das als tiefgezogenes Blechteil topfförmig mit einem zylinderförmigen Eisenrückflußteil ausgebildet ist und dessen Boden eine erste Lagerstelle für die Läuferwelle aufweist und in dessen an der anderen Stirnseite des das Statorblechpaket umgebenden Eisenrückflußkörpers angeordneten Öffnung ein Lagerschild mit einer zweiten Lagerstelle für die Läuferwelle eingesetzt ist. Auch ist ein nach außen gerichteter, zylindrisch ausgebildeter Durchzug vorhanden, in dessen Hohlraum das Kugellager der ersten Lagerstelle angeordnet ist.

Weiterhin ist durch die FR-A-22 87 800 ein Elektromotor bekannt, bei dem die Kugellager zur Lagerung der Rotorwelle in Durchzügen des Gehäuses angeordnet sind. Schließlich zeigt die GB-A-10 64 955 einen Elektromotor mit einem topfförmigen Gehäuse, in dessen Öffnung ein Lagerschild befestigt angeordnet ist. Die Befestigungsmittel bestehen hierbei aus einzelnen Blechstücken.

Die oben genannten Verfahren und Anordnungen erfordern alle noch eine Vielzahl von Bearbeitungsvorgängen und sind für eine billige Massenfertigung weniger geeignet.

Der Erfindung liegt die Aufgabe zugrunde, ein Gehäuse, insbesondere für elektrische Kleinmotoren zu schaffen, das einfacher und billiger herzustellen ist und das aber allen Anforderungen hinsichtlich der Stabilität und Zentrierung der Lagerstellen der Bauteile gerecht wird. Diese Aufgabe wird durch die im Patentanspruch 1 gekennzeichneten Merkmale gelöst.

Das aus einem Blechteil hergestellte Gehäuse zeichnet sich durch eine einfache Herstellung mit einer hohen Maßgenauigkeit aus. Hierdurch sind nachträgliche spanabhebende Bearbeitungsvorgänge nicht mehr erforderlich.

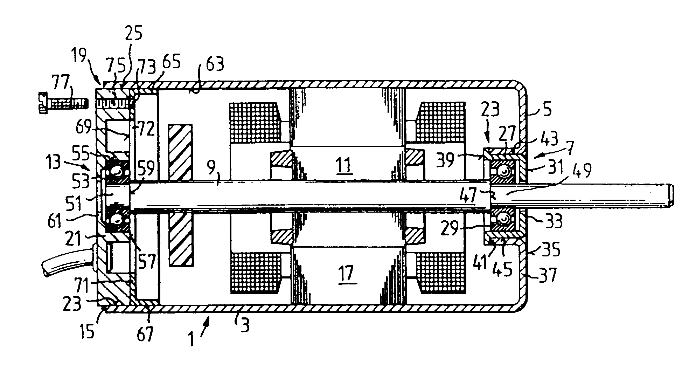

Weitere Merkmale und vorteilhafte Ausgestaltungen der vorliegenden Erfindung gehen aus der nachstehenden Beschreibung und der Zeichnung von einer bevorzugten Ausführungsform hervor.

In der einzigen Figur ist eine erste Ausführungsform eines Gehäuses 1, insbesondere für elektrische Kleinmaschinen dargestellt, das topfförmig mit einem zylinderförmigen Eisenrückflußkörper 3 ausgebildet ist und aus einem tiefgezogenen Blechteil besteht. Der Boden 5 weist eine erste Lagerstelle 7 für die Läuferwelle 9 eines Läufers 11 auf, während sich die zweite Lagerstelle 13 in einem Lagerschild 21 befindet. Dieses Lagerschild 21 füllt eine an der anderen Stirnseite 15 des das Statorblechpaket 17 umgebenden Rückflußkörpers 3 angeordnete Öffnung 19 aus. Das Lagerschild 21 ist mit einer zylindrischen Mantelfläche 23 in einer entsprechend zylindrisch ausgebildeten Paßfläche 25 in der Öffnung 19 gelagert. Übrigens weist der Boden 5 des Eisenrückflußkörpers 3 gemäß Figur einen nach innen gerichteten, zylindrisch ausgebildeten Durchzug 23 zur Aufnahme der ersten Lagerstelle 7 auf, welche von einem in einem topfförmigen Einsatzteil 27 angeordneten Kugellager 29 gebildet ist. Dieses topfförmige Einsatzteil 27 besteht ebenfalls aus einem tiefgezogenen Blechteil. Die Außenoberfläche 31 des Bodens 33 des Einsatzteiles 27 schließt mit der Außenoberfläche 35 des Bodens 37 des Eisenrückflußkörpers 3 bündig ab. Das ebenfalls aus einem Tiefziehblechteil bestehende Einsatzteil 27 liegt mit einem umlaufenden Flanschteil 39 auf dem Stirnrand 41 des Durchzuges 23 an und ist mit einer zylindrischen Mantelfläche 43 in der offenen Lagerbohrung 45 des Durchzuges 23 eingepaßt angeordnet. Die axiale Sicherung des Kugellagers 29 erfolgt einerseits durch eine Anschlagschulter 47, welche an der Übergangsstelle der Läuferwelle 9 auf eine im Durchmesser verkleinerte Lagerfläche 49 für das Kugellager 29 angeordnet ist. Auf der anderen Seite der Läuferwelle 9 befindet sich ebenfalls eine im Durchmesser abgesetzte Lagerfläche 51 für ein zweites Kugellager 53, welches die zweite Lagerstelle 13 bildet. Dieses Kugellager 53 ist in einer Sacklochbohrung 55 eingepreßt angeordnet, welche in die Innenoberfläche 57 des Lagerschildes 21 eingearbeitet ist. Die axiale Sicherung dieses zweiten Kugellagers erfolgt einerseits durch eine Anschlagschulter 59 an der Übergangsstelle der Lagerfläche 51 zu den im Durchmesser vergrößerten Teil der Läuferwelle 9 und andererseits durch den Boden 61 in der Sacklochbohrung 55.

Das Lagerschild 21 mit der zweiten Lagerstelle 13 besteht aus einem Spritzgußteil z. B. aus Aluminium und ist durch an der Innenumfangsfläche 63 des Eisenrückflußkörpers 3 angeordnete Befestigungsmittel in axialer Richtung sicherbar.

Gemäß Figur bestehen diese Befestigungsmittel aus einem winkelförmigen Befestigungsring 65, dessen äußere Umfangsfläche 67 mittels einer Schweißverbindung mit dem Eisenrückflußkörper 3 fest verbunden ist. Die Bodenfläche 69 des Befestigungsringes 65 weist eine große zentrische Öffnung 72 mit in dem Rand 71 angeordneten Gewindebohrungslöchern 73 auf, in welche durch Durchgangsbohrungen 75 steckbare Befestigungsschrauben 77 einschraubbar sind. Hierdurch wird das Lagerschild 21 fest mit dem Eisenrückflußkörper 3 auf einfachste Weise verbunden.

Im Rahmen der Erfindung kann der winkelförmig ausgebildete Befestigungsring 65 auch aus einzelnen winkelförmigen Blechstücken mit der Innenumfangsfläche 63 des Eisenrückflußkörpers 3 entsprechend angepaßten Befestigungsflanschen bestehen.

## Patentansprüche

1. Gehäuse, insbesondere für elektrische Kleinmaschinen, das als tiefgezogenes, Blechteil topfförmig mit einem zylinderförmigen Eisenrückflußkörper (3) ausgebildet ist und dessen Boden (5) eine erste Lagerstelle (7) für die Läuferwelle (9) aufweist und in dessen an der anderen Stirnseite des das Statorblechpaket (17) umgebenden Eisenrückflußkörpers angeordneten Öffnung (19) ein Lagerschild (21) mit einer zweiten Lagerstelle (13) für die Läuferwelle eingesetzt ist, **dadurch gekennzeichnet,** daß der Boden (5) einen nach innen gerichteten, zylindrisch ausgebildeten Durchzug (23) zur Aufnahme der ersten Lagerstelle (7) aufweist, welche von einem in einem topfförmig ausgebildeten Einsatzteil (27) angeordneten Kugellager (29) gebildet ist, daß die Außenoberfläche (31) des Bodens (33) des Einsatzteiles (27) mit der Außenoberfläche (35) des Bodens (37) des Eisenrückflußkörpers (3) bündig abschließt, daß das topfförmig ausgebildete Einsatzteil (27) mit einem umlaufenden Flanschteil (39) auf dem Stirnrand (41) des Durchzuges (23) aufliegt, und daß die Öffnung (19) des Eisenrückflußkörpers (3) mit einer zylindrischen Paßfläche (25) zur Aufnahme eines eine zylindrische Mantelfläche (123) aufweisenden Lagerschildes (21) mit der zweiten Lagerstelle (13) versehen ist.

2. Gehäuse nach Anspruch 1, **dadurch gekennzeichnet,** daß das scheibenförmig ausgebildete Lagerschild (21) in seiner Innenoberfläche (57) eine zentrisch, als Sackloch ausgebildete Lagerbohrung (55) für ein die zweite Lagerstelle für die Läuferwelle (9) des Läufers (11) bildendes Kugellager (53) aufweist.

3. Gehäuse nach Anspruch 2, **dadurch gekennzeichnet,** daß das Lagerschild (21) mit der zweiten Lagerstelle (13) aus einem Spritzgußteil, z. B. aus Aluminium besteht.

4. Gehäuse nach Anspruch 3, **dadurch gekennzeichnet,** daß das in die Öffnung (19) eingesetzte Lagerschild (21) durch an der Innenumfangsfläche (63) des Eisenrückflußkörpers (3) angeordnete Befestigungsmittel in axialer Richtung sicherbar ist.

5. Gehäuse nach Anspruch 4, **dadurch gekennzeichnet,** daß die Befestigungsmittel aus einem winkelförmigen Befestigungsring (65) bestehen, dessen äußere Umfangsfläche (67) mittels einer Schweißverbindung mit dem Eisenrückflußkörper (3) verbunden ist und dessen eine große zentrale Öffnung (72) aufweisende Bodenfläche (69) an dem Rand (71) Gewindebohrungen (73) aufweist, in welche durch Durchgangsbohrungen (75) in dem Lagerschild (21) durchsteckbare Befestigungsschrauben (77) einschraubbar sind.

## Claims

1. Housing, especially for small electric motors, which is constructed in the shape of a cup as a deep-drawn sheet metal part with a cylindrical iron reflux body (3), the base (5) of which has a bearing location (7) for the rotor shaft (9) and in the opening (19) of which arranged at the other end face of the iron reflux body surrounding the laminated core (17) of the stator an end plate (21) with a second bearing location (13) for the rotor shaft is inserted, characterised in that the base (5) has an inwardly oriented, cylindrically constructed passage (23) for the accommodation of the first bearing location (7) which is formed by a ball bearing (29) arranged in an insert part (27) of cup-shaped construction, that the outer surface (31) of the base (33) of the insert part (27) terminates flush with the outer surface (35) of the base (37) of the iron reflux body (3), that the insert part (27) constructed in the shape of a cup rests by a peripheral flange part (39) on the front edge (41) of the passage (23) and that the opening (19) of the iron reflux body (3) with a cylindrical fitting surface (25) for accommodating an end plate (21) having a cylindrical envelope surface (123) is provided with the second bearing location (13).

2. Housing according to Claim 1, characterised in that in its inner surface (57) the end plate (21) constructed in the shape of a disk has a bearing bore (55) constructed centrally as a pocket hole for a ball bearing (53) forming the second bearing location for the rotor shaft (9) of the rotor (11).

3. Housing according to Claim 2, characterised in that the end plate (21) with the bearing location (13) consists of an injection moulded part made eg of aluminium.

4. Housing according to Claim 3, characterised in that the end plate (21) inserted in the opening (19) can be secured in the axial direction by means of fastening means arranged on the inner circumferential surface (63) of the iron reflux body (3).

5. Housing according to Claim 4, characterised in that the fastening means consist of an angular fastening ring (65) the outer circumferential surface (67) of which is connected by means of a welded joint to the iron reflux body (3) and the base surface (69) of which exhibiting a large central opening (72) has threaded bores (73) at the periphery into which fastening screws (77) can be screwed which can be pushed through through-holes (75) in the end plate (21).

## Revendications

1. Carter, en particulier pour petites machines électriques, qui comprend, en tant que tôle emboutie en forme de pot, un corps de refluement (3) cylindrique en fer et dont le fond (5) présente un premier palier (7) pour l'arbre de rotor (9), carter dans les ouvertures (19) duquel, se trouvant sur l'autre face avant du corps de refluement en fer entourant le paquet de tôle de stator (17), est inséré un flasque (21) présentant un second palier (13) pour l'arbre de rotor, caractérisé en ce que le fond (5) présente un passage (23) cylindrique dirigé vers l'intérieur pour le logement du premier palier (7) qui est constitué par un roulement à billes (29) disposé dans un insert (27) en forme de pot, en ce que la surface externe (31) du fond (33) de l'insert (27) se raccorde bord à bord avec la surface externe (35) du fond (37) du corps de refluement (3) en fer, en ce que l'insert en forme de pot (27) repose par une bride circulaire (39) sur le bord avant (41) du passage (23) et en ce que l'ouverture (19) du corps de refluement (3) en fer est munie d'une surface cylindrique d'ajustement (25) pour le logement d'un flasque (21) dont la surface (123) d'enveloppe est cylindrique et qui porte le second palier (13).

2. Carter selon la revendication 1, caractérisé en ce que le flasque (21) en forme de disque présente un alésage de roulement centré (55) conçu comme un trou borgne prévu pour un roulement à billes (53) formant le second palier pour l'arbre de rotor (9) du rotor (11).

3. Carter selon la revendication 2, caractérisé en ce que le flasque (21) avec le second palier (13) se compose d'une pièce moulée par injection, en aluminium par exemple.

4. Carter selon la revendication 3, caractérisé en ce que le flasque (21) inséré dans l'ouverture (19) peut être fixé axialement par des moyens de fixation disposés sur la surface périphérique interne (63) du corps de refluement en fer (3).

5. Carter selon la revendication 4, caractérisé en ce que les moyens de fixation se composent d'une bague de fixation angulaire (65) dont la surface périphérique externe (67) est reliée, par une soudure, au corps de refluement en fer (3) et dont la surface de fond (69), présentant une grande ouverture centrale (72), comprend au bord (71) des alésages taraudés (73) dans lesquels sont vissées des vis de fixation (77) insérables à travers des perçages de passage (75) dans le flasque (21).
